(19) Europäisches Patentamt
European Patent Office
Office européen des brevets

(11) **EP 2 236 440 A1**

(12) **EUROPEAN PATENT APPLICATION**

(43) Date of publication:
**06.10.2010 Bulletin 2010/40**

(51) Int Cl.:
***B65G 1/04*** *(2006.01)*

(21) Application number: **09173183.6**

(22) Date of filing: **15.10.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA RS**<br><br>(30) Priority: **01.04.2009 IT TV20090063** | (71) Applicant: **SAE Progetti S.R.L.**<br>**30010 Campagna Lupia (VE) (IT)**<br><br>(72) Inventor: **Volonnino, Armando**<br>**31020 Revine Lago TV (IT)**<br><br>(74) Representative: **Modiano, Micaela Nadia et al**<br>**Modiano & Partners**<br>**Via Meravigli, 16**<br>**20123 Milano (IT)** |

(54) **Storage rack with a machine for automatic pickup/deposition of items by means of forks**

(57)     A machine for the automatic pickup/deposition of items (2) on a storage structure provided with equidistant slats (14); laterally to the storage structure there is a movable station provided with a platform (11), which in turn can move vertically and comprises one or more forks (12) that have telescopic elements (13). The center distance (Ist) between the slats (14) is a submultiple of the center distance between the elements (13) or the forks (12). The width (Lsf) of the telescopic elements (13) is instead smaller than, or equal to, the center distance (Ist) of the slats (14). The total space occupation of each one of the forks (12) is less than twice the center distance (Ist) of two consecutive slats (14).

Fig.6

Printed by Jouve, 75001 PARIS (FR)

EP 2 236 440 A1

**Description**

The present invention relates to a machine for the automatic pickup/deposition of items by means of forks.

Automatic systems are currently known which are suitable for allowing the movement of items within storage structures.

These known types of systems therefore comprise a station, which can move on a rail and is interposed between storage structures composed of racks on which such items are placed.

The movable station is provided with a platform that can move vertically and picks up the item, lifts it to the desired height of the shelf of the rack on which it is to be placed, forks being provided which have telescopic elements that arrange the item at appropriately provided slats that protrude from the shelf.

Such slats are usually two for each item to be supported, with the optional addition of a third intermediate slat for avoiding the flexing of the item at the center, so as to allow merely the insertion of the forks below the item.

These automatic systems of a known type have some drawbacks, including the need to use items of a fixed size or within very limited ranges in order to allow efficient loading, unloading and storage.

This inefficiency makes the known type of automatic system less flexible and/or less efficient than, for example, loading and unloading performed by using lifting and transport means guided by an operator.

Moreover, the use of items having predefined widths entails the occupation of only part of the useful volume of the rack, and this requires, therefore, the design of much larger volumes than those of the items to be stored.

Systems are also known which use, for the racks, continuous surfaces so as to be able to maximize the storage space and allow easier deposition.

Further, in the previously described background art the use of a fork with telescopic elements usually entails the sliding of the item on the shelf, with consequent damage thereof.

However, these solutions have a severe drawback, because the continuous surface does not allow the diffusion of firefighting liquids or powders to any underlying levels, a condition which is nevertheless necessary due to the type and number of products stored thereat.

Moreover, the storage capacity of systems with continuous surfaces of a known type is very low, since it is necessary to leave between one item and the next the space needed for the passage of the telescopic elements, which enter laterally to the item instead of below the item.

The aim of the present invention is to solve the above noted technical problems, eliminating the drawbacks of the cited background art, by providing a machine for automatic pickup/deposition of items that has a high flexibility and an efficient management of the positions for pickup/deposition/storage of the items, pickup and deposition being feasible also with items having dimensions that are highly variable both in terms of width and in terms of depth.

Within this aim, an object of the invention is to provide a machine that makes it possible to achieve the pickup/deposition of items without sliding yet allows effective intervention of firefighting systems.

Another object of the invention is to provide a machine that makes it possible to achieve the pickup/deposition of a variable number of items arranged on the platform which can move vertically with respect to the movable station.

Another object is to obtain a machine that is effective, structurally simple, has low manufacturing costs and can be provided by means of usual known systems.

This aim and these objects, as well as others that will become better apparent hereinafter, are achieved by a machine 1 for the automatic pickup/deposition of items 2 on a storage structure provided with equidistant slats 14, laterally to which a station 3 can move which is provided with a platform 11, which in turn can move vertically and comprises one or more forks 12 that have telescopic elements 13, **characterized in that** the center distance $I_{st}$ between said slats 14 is a submultiple of the center distance $I_{sf}$, $I_f$ between said elements 12 or said forks 12, the width $L_{sf}$ of said slats 13 being smaller than, or equal to, said center distance $I_{st}$ of said slats 14, the total space occupation of each one of said forks being less than twice the center distance $I_{st}$ of said slats 14.

Further characteristics and advantages of the invention will become better apparent from the following detailed description of a particular but not exclusive embodiment thereof, illustrated by way of non-limiting example in the accompanying drawings, wherein:

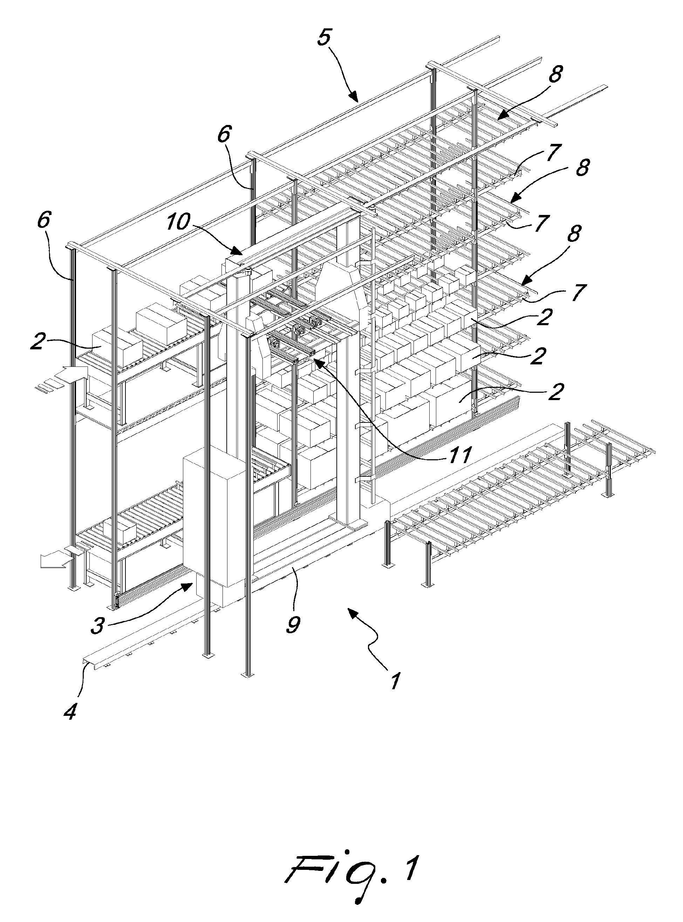

Figure 1 is a side perspective view of a machine according to the invention;

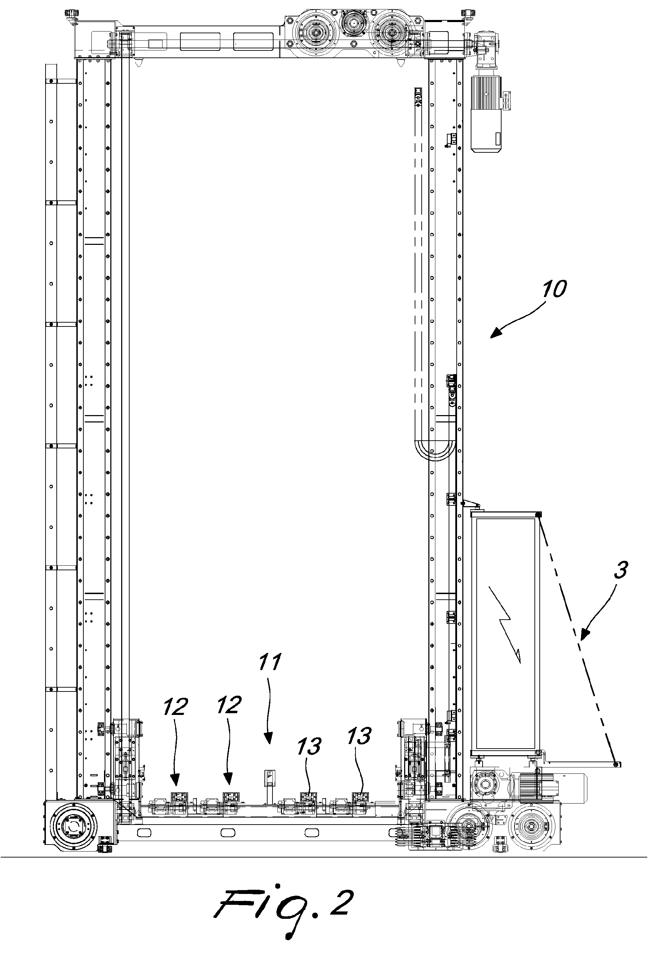

Figure 2 is a front view of the machine;

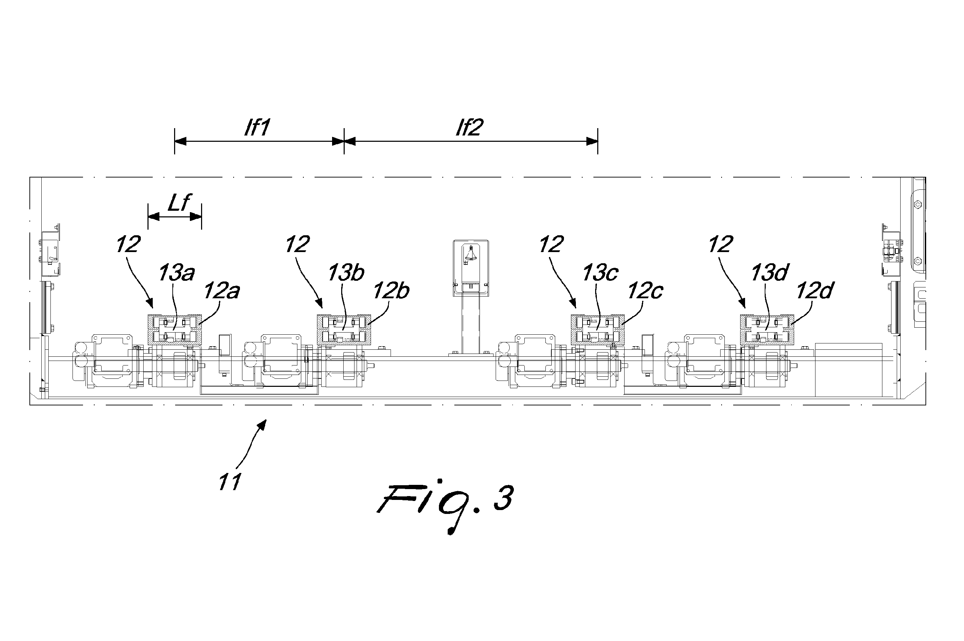

Figure 3 is a view of a detail of the placement of the forks according to figure 2;

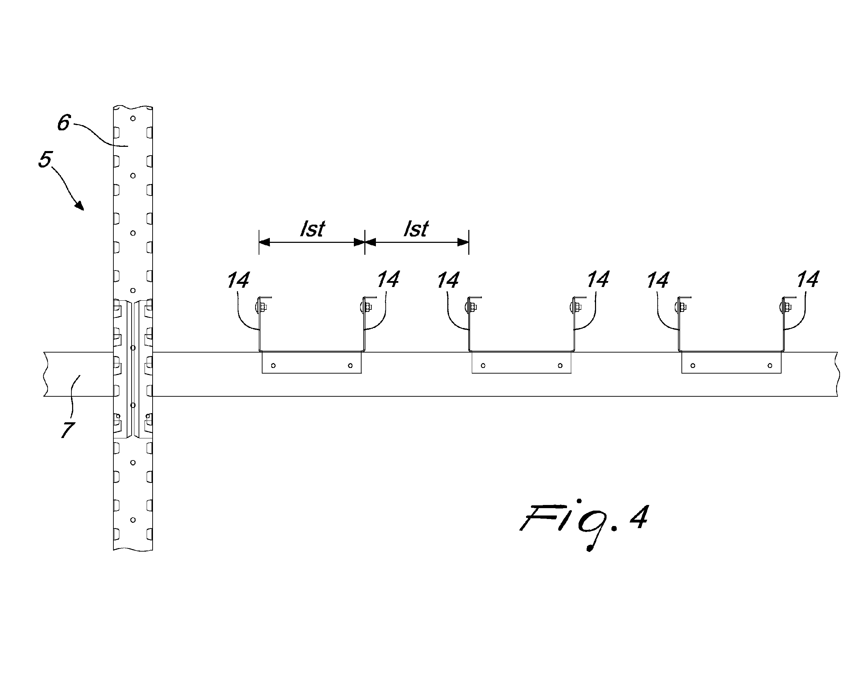

Figure 4 is a detail view of the arrangement of the slats;
Figure 5 is a detail side view of the machine;

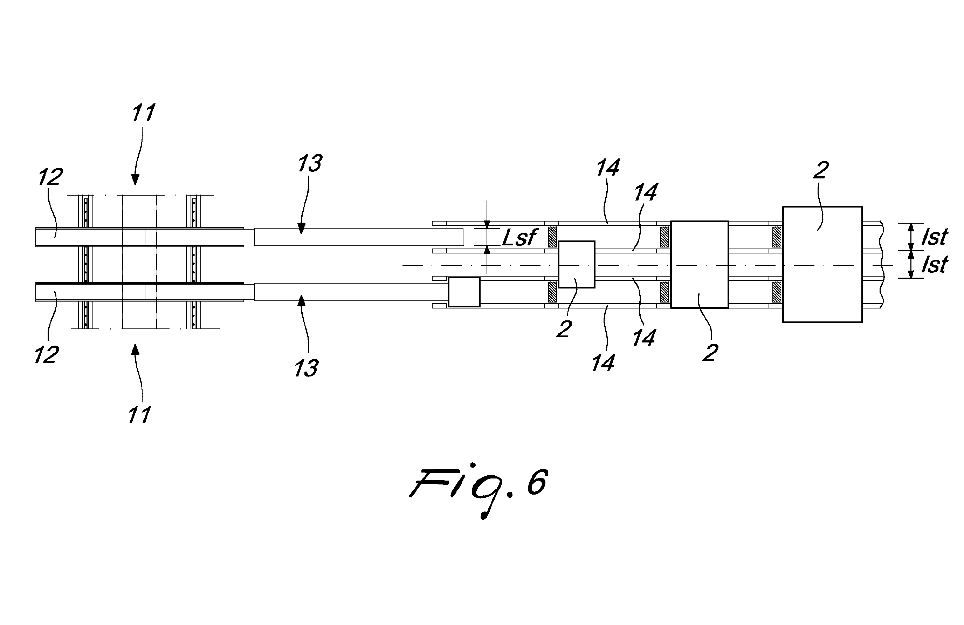

Figure 6 is a schematic top view of the interaction of the forks and of the telescopic elements with the slats.

In the exemplary embodiments that follow, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

With reference to the figures, the reference numeral 1 designates a machine for the automatic pickup and deposition of items, designated by the reference numeral 2, of various sizes, which can even differ very greatly.

The machine 1 consists of a station 3 that can move on an appropriately provided rail 4, which is arranged laterally adjacent to a storage structure, such as at least one rack 5 consisting of a series of uprights 6 and cross-members 7, which are arranged in pairs on parallel planes so as to form shelves 8 for the storage of the items 2.

The station 3 therefore comprises a carriage 9, which supports a portal 10 adapted to guide a platform 11, which thus moves vertically with respect to the rail 4, rising and descending to the desired extent.

Forks 12 are mounted on the platform 11 and in the particular embodiment shown are four in number.

A telescopic element 13 is arranged axially to each fork 12 and is conveniently moved bidirectionally so as to allow its movement towards and away from the laterally adjacent rack 5.

Suitable electromechanical control and actuation components are mounted on the platform 11 and are suitably sized in accordance with the space occupation of the individual fork.

In particular, there is an electric motor for each fork, for allowing the independent and/or simultaneous movement of such forks.

Each telescopic element 13 of each fork 12 can therefore be extended by the necessary length due to an electric motor and a suitable closed-loop control system.

The rack 5 that constitutes the storage structure is composed of regions for the pickup or deposition of the items, also known as bays, which have, at the cross-members 7, a plurality of slats 14 obtained for example by the use of U-shaped elements whose base is coupled in a lower region to the cross-member 7 and has a chosen length which is in any case slightly greater than the center distance between two cross-members arranged on the same surface.

The abbreviation Ist designates the center distance between two adjacent slats 14 and the abbreviation Lsf designates the width of each telescopic element 13.

The abbreviations If1 and If2 also designate the center distance between a first fork 12a and a second fork 12b, which are mutually adjacent, and between said second fork 12b and the adjacent third fork 12c.

The center distance between the slats Ist is a submultiple of the center distance between the telescopic elements or forks Ifx according to the following formula:

$$Ifx = n \cdot Ist$$

where "n" is an integer greater than 1 and "x" is the number that can be assigned to the corresponding telescopic element or fork.

In the particular embodiment, the center distance between two contiguous slats Ist is equal to half the center distance between the first and second telescopic elements, designated by the abbreviation Ifl, and to one third of the center distance between the second and third telescopic elements, designated by the abbreviation If2, the center distance between two slats Ist being greater than the width, designated by the abbreviation Lsf, of each telescopic element 13.

The width of each fork, also indicated by the abbreviation Lf, must also be less than twice the center distance between two slats Ist.

This last condition is indispensable for being able to position on the platform 11 the forks 12 close to each other so as to have a center distance that is twice the one between the slats, since if it were less than twice this distance there might be errors, because the deposition of an item 2 on a single slat 14 might be possible and this would not allow the stability of the item 2.

Further, the center distance If between the forks 12 is greater than, or equal to, twice the center distance Ist between two slats 14.

A schematic representation of the formulas mentioned above is provided hereafter:

$$(If1/2) \geq Ist \geq (If2/3)$$

$$Ist > Lsf$$

$$Lf < 2(Ist)$$

$$If \geq 2(Ist)$$

Pickup of the items 2 without sliding is provided in depth by means for lifting/lowering the forks 12 and a suitable electronic control, which allows their extension by the necessary depth, whereas in terms of width pickup without sliding can be achieved by means of the independent telescopic elements 13, which are not extracted where this is not necessary.

The slats 14 arranged at a regular distance form a discrete surface, which is used as if it were a continuous surface for the items 2 that can be stored, but since the slats 14 have a very limited width (which is negligible with respect to the empty spaces between one slat and the next), they do not create barrier planes.

The distance on the storage structure between one item 2 and the next is less than the distance between two slats 14: this situation cannot be established with known systems having a continuous surface, which further have the disadvantage of requiring much more expensive storage structures and less flexible pickup/deposition systems, which are not suitable in case of items on pallets, panels or stacks of various kinds.

The pickup/deposition of items of flexible width is possible because the forks 12 are independent and the width of the telescopic elements 13 and of the forks 12 that are closest is greater than one fourth of the center distance of the forks 12.

This particularity is necessary in the case of small items.

Example 1: if the width of the item is less than three times the width of the telescopic element, it is loaded so as to be centered on a single fork without losing stability.

Example 2: if the width of the item is greater than three times the width of the telescopic element, it can be loaded on two, three, four, etc. forks for ensuring a higher stability (which is useful especially in the case of panels and crates).

Example 3: if the width is slightly more than three times the width of the telescopic element, stability on the forks is ensured by picking the item up with two contiguous forks whose center distance is less than one fourth of the center distance of the forks.

In this case, the item rests on two forks during transport and, after deposition on the slats, stability is nonetheless ensured because the item rests on at least two slats due to the dimensional choices described earlier and due to the presence of at least one pair of forks at a minimum distance (center distance greater than, or equal to, twice the center distance between two slats).

The operation of the invention is as follows.

For better comprehension, the operation is divided into different steps, so that they can be described individually.

The described steps are: F1 reception and F2 delivery of the items toward the outside of the structure, F3 deposition and F4 pickup on the storage structure.

In the step F1 for receiving the items, the station 3 and the platform 11 perform a translational motion in the corresponding position; one or more of the telescopic elements 13 are extracted depending on the width of the item 2, the length of the extracted part of each telescopic element depending on the depth of the item 2 to be loaded.

Then the telescopic element or elements 13 retract and the item 2 is ready on board to be stored conveniently.

If loading of a small item 2 is desired, only the telescopic element 13a is extracted.

If instead loading of a larger item is desired, several telescopic elements 13 are extracted as a function of its width.

If loading of two small items is desired, first the telescopic element 13a is extracted and the first item is loaded, and then (or simultaneously, if allowed by the entry position) the telescopic element 13b or 13c or 13d or other adjacent elements are extracted and the second item is loaded.

The steps F2 for the delivery of the items 2 are similar to the reception steps: the station 3 and the platform 11 perform a translational motion in the corresponding position, one or more of the telescopic elements 13 are extracted depending on the width and the number of items 2 on board the platform 11, the length of the extracted part of each telescopic element depending on the depth of the item or items 2 to be unloaded.

The telescopic elements 13 are then retracted.

In the steps F3 for deposition on the storage structure, the station 3 and the platform 11 perform a translational motion into the storage position.

One or more of the telescopic elements 13 exit by a length that depends on the length and/or the number of items 2 and on the possibility of depositing them on the first, second, third level, etcetera.

Due to the possibility of moving the telescopic elements 13 independently of each other and due to the compatibility between the slats 14 and the telescopic elements 13, it is possible to deposit the item or items 2 very close to any that have already been stored.

The distance between two consecutive items 2 is shorter than the distance between two consecutive slats 14.

Due to the choice of suitable and well-known electric motors which are conveniently controlled and actuated, it is possible to deposit the item 2 in the innermost available position.

In the steps F4 for pickup from the storage structure, the station 3 and the platform 11 perform a translational motion into the storage position.

One or more of the telescopic elements 13 exit by a length that depends on the length, number, depth and position of the items 2 to be picked up (at a first, second, third level, etcetera).

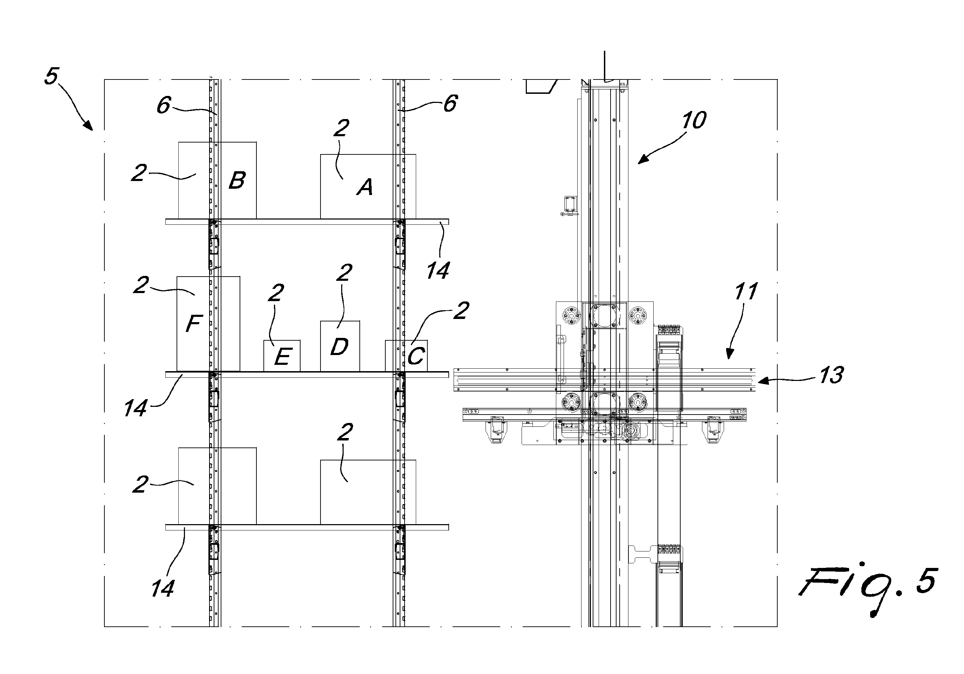

As shown in Figure 5, if one must pick up an item arranged like the item A (item at a first depth) and the item B does not have to be picked up (item at a second depth), the telescopic element or elements 13 are extracted by a length that is equal to the length of the first item and no more, so as to be able to pick up only the first item without interfering with the second one.

If it is necessary to pick up the items C, D, E but not the item F, the telescopic element or elements 13 are extracted by a length that is equal to that of the first three items and no more, so as to be able to pick up only the first three items without interfering with the fourth one.

In practice it has been found that the invention has achieved the aim and objects mentioned above, a machine having been obtained which allows the loading and unloading of the items in a flexible manner depending on both dimensions and position, maintaining a high storage capacity, since it receives and delivers items of various sizes and from various contiguous or non-contiguous positions, deposits the items in any storage position and therefore allows more efficient storage, performed in accordance with their actual size.

The machine further picks up the items from any storage position and any depth (first, second, third depth etcetera).

Pickup/deposition of items without sliding is further allowed and therefore so is the pickup of items of various kinds: crates, panels, elements loaded on pallets, boxes, delicate items not to be scratched.

Finally, the use of slats that are spaced appropriately according to the dimensions of the forks and of the telescopic elements defines resting surfaces that can be likened to a continuous surface but at the same time do not cause undesired interference in case of intervention of firefighting systems.

The materials used, as well as the dimensions that constitute the individual components of the invention, may of course be more pertinent according to specific requirements.

The various means for performing certain different functions need not certainly coexist only in the illustrated embodiment but can be present per se in many embodiments, including embodiments that are not illustrated.

The characteristics indicated as advantageous, convenient or the like may also be omitted or be replaced with equivalents.

The disclosures in Italian Patent Application No. TV2009A000063 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

**Claims**

1. A machine (1) for the automatic pickup/deposition of items (2) on a storage structure provided with equidistant slats (14) and laterally to which a station (3) can move which is provided with a platform (11), which in turn can move vertically and comprises one or more forks (12) that have telescopic elements (13), **characterized in that** the center distance (Ist) between said slats (14) is a submultiple of the center distance Ifx between said elements (13) or said forks (12), the width (Lsf) of said slats (14) being smaller than, or equal to, said center distance (Ist) of said slats (14), the total space occupation of each one of said forks being less than twice the center distance (Ist) of said slats (14).

2. The machine according to claim 1, **characterized in that** said forks (12) have telescopic elements (13) that can move independently and longitudinally in the two directions, said forks (12) being movable also at right angles and constituting means for the lifting/lowering of said items (2), the center distance Ifx between said forks (12) being greater than, or equal to, twice the center distance (Ist) between two of said slats (14).

3. The machine according to one or more of the preceding claims, **characterized in that** the center distance (Ist) of said slats (14) is comprised between half and one third, respectively, of the center distance (Ifl, If2) between a first fork (12a) and a second fork (12b) or telescopic element (13) which are consecutive and between said second fork (12b) and a third fork (12c) or telescopic element (13) that is adjacent.

4. The machine according to one or more of the preceding claims, **characterized in that** the center distance (Ist) between two of said contiguous slats is equal to half the center distance (If1) between the first and the second telescopic element and one third of the center distance (If2) between the second and third telescopic elements.

5. The machine according to one or more of the preceding claims, **characterized in that** the center distance (Ist) between two of said slats is greater than the width (Lsf) of each one of said telescopic elements (13).

6. The machine according to one or more of the preceding claims, **characterized in that** the width (Lf) of each one of said forks (12) is less than twice the center distance (Ist) between two of said slats (14).

7. The machine according to one or more of the preceding claims, **characterized in that** the center distance (If) between said forks (12) is greater than, or equal to, twice the center distance (Ist) between two of said slats (14).

8. The machine according to claim 1, **characterized in that** the pickup of said items (2) without sliding is implemented in depth by means for lifting/lowering said forks (12) and by a suitable electronic control, which allows their extension to the necessary depth, whereas in terms of width pickup without sliding can be achieved by said independent telescopic elements (13), which are not extracted where this is not necessary.

9. The machine according to one or more of the preceding claims, **characterized in that** the distance between one item (2) and the next in the stored condition is shorter than the distance between two slats (14).

10. The machine according to one or more of the preceding claims, **characterized in that** the center distance between said slats (Ist) is a submultiple of the center distance between the telescopic elements or the forks (Ifx), according to the following formulation:

$$Ifx = n \bullet Ist$$

where "n" is an integer greater than 1 and "x" is the number that can be assigned to the corresponding telescopic element or fork, the following relations further occurring:

$$(If1/2) \geq Ist \geq (If2/3)$$

$$Ist > Lsf$$

$$Lf < 2(Ist)$$

$$If \geq 2(Ist)$$

*Fig.1*

**Fig.2**

Fig. 3

Fig. 4

Fig. 5

Fig. 6

Europäisches
Patentamt

European
Patent Office

Office européen
des brevets

## EUROPEAN SEARCH REPORT

**Application Number**

EP 09 17 3183

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2004 115157 A (ISHIKAWAJIMA TRANSP MACHINERY; ISHIKAWAJIMA HARIMA HEAVY IND) 15 April 2004 (2004-04-15) | 1-7,9-10 | INV. B65G1/04 |
| Y | * paragraph [0055]; figures 1-6 * | 8 | |
| | ----- | | |
| Y | JP 08 012012 A (ITOKI CREBIO CORP) 16 January 1996 (1996-01-16) * abstract; figures * | 8 | |
| | ----- | | |
| A | JP 2002 019913 A (TCM CORP) 23 January 2002 (2002-01-23) * abstract; figures 6,9 * | 1 | |
| | ----- | | |
| A | JP 2002 356205 A (ITOKI CREBIO CORP) 10 December 2002 (2002-12-10) * abstract; figures * | 1 | |
| | ----- | | |

**TECHNICAL FIELDS SEARCHED (IPC)**

B65G

The present search report has been drawn up for all claims

| Place of search | Date of completion of the search | Examiner |
|---|---|---|
| The Hague | 16 December 2009 | Schneider, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 17 3183

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2009

| Patent document cited in search report | | Publication date | Patent family member(s) | | Publication date |
|---|---|---|---|---|---|
| JP 2004115157 | A | 15-04-2004 | JP | 4043901 B2 | 06-02-2008 |
| JP 8012012 | A | 16-01-1996 | JP | 3223709 B2 | 29-10-2001 |
| JP 2002019913 | A | 23-01-2002 | NONE | | |
| JP 2002356205 | A | 10-12-2002 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT TV20090063 A